# EUROPÄISCHE PATENTSCHRIFT

(11) **EP 1 881 251 B1**
(45) Veröffentlichungstag und Bekanntmachung des Hinweises auf die Patenterteilung: **10.04.2013**
(21) Anmeldenummer: 07013878.9
(22) Anmeldetag: 16.07.2007
(51) Int. Cl.: F16L 21/03, F16L 21/04, F16L 37/084, F16L 37/092

(54) **Dichtungsring und Verbindungsvorrichtung für eine Muffenverbindung**
Gasket and connecting device for a socket joint
Bague d'étanchéité et dispositif de liaison pour un raccord à manchon

(30) Priorität: 17.07.2006 AT 12192006
(43) Veröffentlichungstag der Anmeldung: 23.01.2008
(73) Patentinhaber: Semperit Aktiengesellschaft Holding, 1031 Wien (AT)
(72) Erfinder: Miessbacher, Herwig, 8734 Grosslobming (AT)
(74) Vertreter: Burger, Hannes

(56) Entgegenhaltungen:
- EP-A1- 0 565 820
- CH-A- 406 757
- DE-A1- 3 405 988
- US-A- 6 106 029
- US-A1- 2006 119 100

## Beschreibung

Die Erfindung betrifft einen Dichtungsring, wie er im Oberbegriff des Anspruches 1 beschrieben ist, sowie eine Verbindungsvorrichtung, wie Sie im Oberbegriff des Anspruches 20 beschrieben ist.

Aus der CH 406 757 A ist eine Rohrverbindung zwischen einem Muffenteil eines Rohres und eines in den Muffenteil einragenden Spitzendes eines weiteren Rohres und mit einem, in einer dem Spitzende zugewandten umlaufenden Aufnahmenut des Muffenteil eingesetzten elastischen Dichtring bekannt. Der Dichtring ist aus zwei elastischen Teilen verschiedener Härte gebildet, wobei ein härterer O-Ring von einem weichen Profilring vollständig umschlossen ist und ein an der Außenseite des Profilringes vorhandener Ringwulst zwischen dem O-Ring und der Wand der Aufnahmenut liegt.

Aus einem weiteren Dokument, DE 103 06 316 A1 ist eine Muffenrohrverbindung bekannt, bei der in einer umlaufenden Aufnahmenut der Nut der Muffe ein das in die Muffe eingeführte Einsteckende eines Rohres dichtend umfassender Dichtring angeordnet ist, der einstückig aus einem, auf eine Geometrie der Aufnahmenut abgestimmten Haltebereich und einen Dichtbereich aufweist, wobei der Dichtbereich eine geringere Härte aufweist, als der Haltebereich. Die Muffe weist im Stirnendbereich eine weitere Nut auf in der Rückhalteriegel als Auszugssicherung für das Rohr eingesetzt sind.

Aus dem Dokument DE 10 2004 038 333 A1 ist ein Dichtring für Steckmuffenverbindungen bekannt, der aus hochwertigem, elastomeren Kunststoff oder einem Elastomer als Teilelement besteht, das ein durch den Dichtwerkstoff mindestens teilweise umschlossenes Endstück am Dichtungsanfang als Kern aus einem härteren Kunststoff, wie PP, aufweist, das ein Basiselement bildet, das einstückig mit einem dichtlippenausbildenden Dichtelement aus unterschiedlichen, eine geringe Härte aufweisenden Dichtelement verbunden ist und dass in den Dichtwerkstoff ein Gleitmittel eingelagert ist, dass an der Oberfläche einen Gleitfilm ausbildet.

Die US 2006/119100 A1 beschreibt eine Muffenverbindung mit einer Muffe und einem Dichtring nach dem Oberbegriff des Anspruchs 1, der in der Muffe angeordnet ist. An der Muffe liegt an einer inneren Oberfläche ein gerippter Ring an.

Aufgabe der Erfindung ist es, einen Dichtungsring für eine druckdichte Rohrverbindung mit einer Anschlussarmatur zu schaffen, der bei einfacher Montage eine hohe Dichtheit und das Rohr in der Armatur gegen Rohr-Auszugskräfte verlässlich sichert.

Diese Aufgabe der Erfindung wird durch die im Kennzeichenteil des Anspruches 1 wiedergegebenen Merkmalen erreicht. Der überraschende Vorteil dabei ist, dass durch eine Kombination eines Dichtelementes mit einem ein Rückhalteelement aufweisenden Stützring geringerer Elastizität mit einem Bauelement sowohl die Dichtheit der Verbindung, wie auch die Aufnahme von Auszugskräften erreicht werden.

Möglich ist auch eine Ausbildung nach Anspruch 2, weil dadurch eine gleichmäßig über den Umfang des Rohres verteilte Rückhaltewirkung und damit konzentrische Übertragung von auftretenden Auszugskräften in die Anschlussarmatur, z.B. eine Rohranschlussmuffe, erreicht wird.

Von Vorteil ist dabei auch eine Ausbildung nach Anspruch 3, wodurch ein Auszug sicherer Sitz des Rückhalteelements und durch eine Keilwirkung eine verstärkte Rückhaltewirkung bei Erhöhung der Auszugskraft erreicht wird.

Möglich ist dabei eine Ausbildung nach Anspruch 4, wodurch die Montage der Rückhaltelemente in den Stützring vereinfacht wird.

Von Vorteil ist auch eine Ausbildung nach Anspruch 5, weil dadurch ein verlässlicher Sitz am Rohr erreicht wird.

Die im Anspruch 6 beschriebene vorteilhafte Ausbildung fixiert die Rückhaltelemente im Stützring für den Aufvulkanisiervorgang des Dichtelements auf den Stützring.

Möglich ist aber auch eine Halterung des Rückhalteelements über am Stützring vorgesehene, insbesondere angeformte, Rastnasen, wie im Anspruch 7 beschrieben, die eine einfache Bestückung des Stützringes mit den Rückhalteelementen gewährleisten.

Durch die im Anspruch 8 beschriebene vorteilhafte Weiterbildung wird eine Vereinfachung des Spritzformwerkzeuges für die Herstellung des Stützringes erreicht.

Gemäß der im Anspruch 9 beschriebenen vorteilhaften Weiterbildung wird bei einer Verdichtung des Dichtelements durch die Aufbringung von Spannkräften durch einen Spannring der Anschlussarmatur ein vergrößertes Verformungsvolumen am Dichtelement erreicht.

Durch die im Anspruch 10 beschriebene doppelkonische Formgebung wird einerseits das Dichtelement bei der Montage in einen das Rohr umgebenden Spaltring gepresst und andererseits über den Spannring die im Stützring angeordneten Rückhalteelemente gegen den Außenumfang des in der Anschlussarmatur einzudichtenden Rohres bereits bei geringen Spannkräften erreicht.

Es ist aber auch vorteilhaft, wie im Anspruch 11 beschrieben, wenn die Basisringfläche etwa im Mittel der Gesamtbreite angeordnet ist, wodurch etwa eine, bezogen auf die Basisringfläche, symmetrische Materialverteilung von Dichtelement und Stützring erreicht wird.

Durch die in den Ansprüchen 12 und 13 beschriebenen vorteilhaften Weiterbildungen wird eine Zentrierung des aufzuvulkanisierenden Dichtelements am Stützring und eine ausreichende Verbindungsfläche zwischen Dichtelement und Stützring erreicht.

Vorteilhaft sind aber auch Ausbildungen nach den Ansprüchen 14 und 15, wodurch die Schlitze den an sich steifen Stützring in gelenkig miteinander verbundenen Teilbereiche, die jeweils mit einem Rückhaltelement bestückt sind, gliedert, wobei jeder Teilbereich für sich in Art eines Spannzangenfingers eine exakte Ausrichtung auf den Außenumfang des zu fixierenden Rohres gewährleistet.

Durch die Ausbildung wie im Anspruch 16 beschrieben, können die Anzugskräfte zur Erzielung einer hohen Dichtwirkung des Dichtelements gering gehalten werden.

Die vorteilhafte Ausbildung wie im Anspruch 17 beschrieben, gewährleistet eine hohe Festigkeit des Stützringes zur Übertragung der für die Erzielung einer hohen Dichtwirkung erforderlichen Spannkräfte auf das mit dem Stützring verbundene Dichtelement.

Auch eine Ausbildung nach Anspruch 18 ist vorteilhaft, wodurch eine hohe Korrosionsbeständigkeit der metallischen Rückhalteelemente erreicht wird und zusätzlich wird durch die Beschichtung eine thermische Anhaftung der Rückhalteelemente an das Dichtelement bewirkt.

Schließlich ist auch eine Ausbildung nach Anspruch 19 vorteilhaft, weil damit korrosionsanfällige Werkstoffe vermieden werden.

Die Erfindung betrifft aber auch eine Verbindungsvorrichtung, wie sie im Anspruch 20 beschrieben ist.

Aufgabe der Erfindung ist es auch, eine Verbindungsvorrichtung für eine druckfeste Verbindung eines Rohres mit einer Anschlussarmatur zu schaffen, die bei Einsparung von Bauteilen sowohl eine hohe Druckdichte wie auch verlässliche Fixierung des Rohres bei Auftreten hoher Auszugskräfte gewährleistet. Diese Aufgabe der Erfindung wird durch die im Kennzeichenteil des Anspruches 20 wiedergegebenen Merkmalen erreicht. Der überraschende Vorteil dabei ist, dass durch die Ausbildung eines Dichtungsringes in einer kombinierten Ausbildung mit einem Dichtelement und einem damit bewegungsfest verbundenen Stützring und in diesen gehalterten Rückhalteelementen die Dicht- und Haltefunktionen von einem einzigen Bauelement gewährleistet ist.

Möglich ist dabei auch eine Ausbildung nach Anspruch 21, weil dadurch bei einer Verstellung des Spannringes in Richtung der Rohrarmatur zur Herstellung einer dichten Anlage des Dichtelements am Rohraußenumfang und der Aufnahmenut der Rohrarmatur sowohl eine axiale Kraft auf den Dichtungsring insgesamt wie auch eine Kraftkomponente auf den Stützring und damit auf die in diesem angeordneten Rückhalteelemente in Richtung der Längsmittelachse einwirkt, wodurch die Rückhaltemittel gegen und teilweise in die Umfangsfläche des Rohres eingepresst werden, wodurch sowohl die dichte Anlage des Dichtelements in der Aufnahmenut und am Rohrumfang wie auch eine hohe Rückhaltekraft erreicht wird.

Möglich ist dabei eine Ausbildung nach Anspruch 22, wodurch einfache Bauelemente erreicht werden.

Von Vorteil ist aber auch eine Ausbildung wie sie im Anspruch 23 beschrieben ist, weil damit eine kompakte, geringe Außenabmessungen aufweisende Verbindungsvorrichtung erreicht wird.

Schließlich beschreiben die in den Ansprüchen 24 und 25 beschriebenen vorteilhaften Ausbildungen mögliche Varianten, durch die eine Anpassbarkeit der Verbindungsvorrichtung an durch den jeweiligen Einsatzfall vorgegebenen Anforderungen erreicht wird.

Zum besseren Verständnis der Erfindung wird diese anhand der in den Figuren wiedergegebenen Beispiele näher erläutert.

Es zeigen:
- Fig. 1: eine Verbindungsvorrichtung mit einem erfindungsgemäßen Dichtungsring, geschnitten;
- Fig. 2: eine andere Ausbildung der Verbindungsvorrichtung mit dem erfindungsgemäßen Dichtungsring, geschnitten;
- Fig. 3: der erfindungsgemäße Dichtungsring in Ansicht;
- Fig. 4: der Dichtungsring, geschnitten, gemäß den Linien IV - IV in Fig. 3;
- Fig. 5: ein Detailschnitt des Dichtungsringes nach Fig. 4;
- Fig. 6: ein Detailschnitt der Verbindungsvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

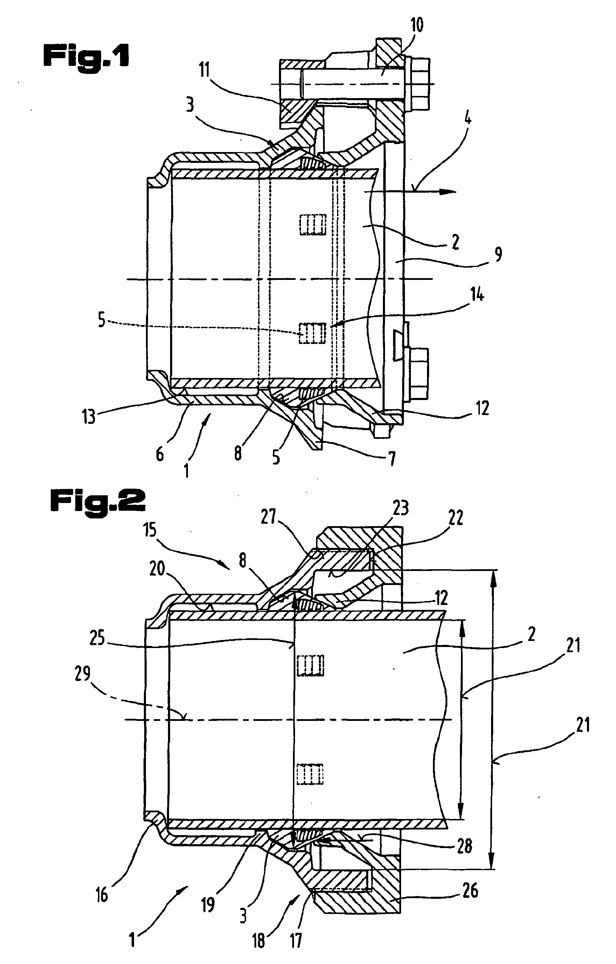

In der Fig. 1 ist eine Verbindungsvorrichtung 1, z.B. Rohranschlussarmatur, mit einem in diese einragenden Rohr 2 gezeigt. Das Rohr 2 umfassend ist in der Rohranschlussarmatur ein Dichtungsring 3 angeordnet der eine druckdichte Verbindung des Rohres 2 mit der Rohranschlussarmatur gewährleistet und zusätzlich das Rohr 2 gegen eine Auszugskraft - gemäß Pfeil 4 - über zumindest ein im Dichtungsring 3 angeordnetes Rückhalteelement 5 sichert.

Die Verbindungsvorrichtung 1 besteht aus einem Rohradapter 6, welcher das Rohr 2 umfasst, und beispielsweise mittels einer Schweißverbindung mit einem Rohr oder einer Verteilerarmatur etc. verbunden ist. Der Rohradapter weist in einem Flanschring 7, eine ringförmig umlaufende Aufnahmenut 8 für den Dichtungsring 3 auf.

Weiter weist die Verbindungsvorrichtung 1 einen das Rohr 2 umfassenden Spannring 9 auf, der mittels Spannschrauben 10 in Richtung des Rohradapters 6 spannbar ist. Beispielsweise sind über den Umfang des Flanschringes 7 des Rohradapters 6, um 120° versetzt drei den Flanschring 7 hintergreifende Spannklauen 11 mit Gewindebohrungen angesetzt in welche die Spannschrauben 10 eingeschraubt sind und damit der Spannring 9 in Richtung des Rohradapters 6 und damit axialer Richtung des Rohres 2 spannbar ist.

Dazu weist der Spannring 9 einen in die Aufnahmenut 8 einragenden Ringfortsatz 12 auf mit dem eine axiale Schubkraft auf den Dichtungsring 3 bewirkt wird, wodurch eine Verformung des Dichtungsringes 3 erreicht wird, durch welche es zu einer Aufweitung und dichten Anlage am Rohr 2 sowie in der Aufnahmenut 8 des Rohradapters 6 kommt und wodurch der druckdichte Abschluss erreicht wird.

Der Ringfortsatz 12 bewirkt weiters durch eine dem Rohr 2 zugewandte konische Anlagefläche in Verbindung mit der noch später im Detail näher beschriebenen geometrischen Form des Dichtungsringes 3 auch ein Anpressen des im Dichtungsring 3 vorgesehenen Rückhalteelementes 5 am Außenumfang 13 des Rohres 2, wodurch eine Auszugssicherung 14 erreicht wird.

Im gezeigten Ausführungsbeispiel ist der Spannring 9 über drei der Schrauben 10 und Spannklauen 11, die über den Umfang gleichmäßig verteilt sind, relativ zum Rohradapter 6 in axialer Richtung des Rohres 2 verstellbar, wobei dessen Ringfortsatz 12 über den gesamten Umfang verlaufend, am Dichtungsring 3 anwirkt und damit eine gleichmäßige, über den gesamten Umfang wirkende Kraftaufbringung auf den Dichtungsring 3 erreicht wird.

In der Fig. 2 ist eine andere Ausführung der Verbindungsvorrichtung 1 mit dem erfindungsgemäßen Dichtungsring 3 gezeigt. Nach dieser Ausführung ist in einem Endbereich 15 eines Rohres 16 eine mit einem Außengewinde 17 versehende Anschlussmuffe 18 vorgesehen.

Diese Anschlussmuffe 18 ist beispielsweise am Rohr 16, z.B. einem Gussrohr, angeformt. Möglich ist aber auch die Anschlussmuffe 18 als Anschweißmuffe auszubilden, welche mit dem Rohr 16 durch einen Schweißvorgang verbunden ist.

In die Anschlussmuffe 18 ist das mit dem Rohr 16 druckdicht zu verbindende Rohr 2 eingeführt und über einen Zentrierring 19 in einer Aufnahme 20 der Anschlussmuffe 18 zur Erzielung eines glatten Strömungsüberganges für ein Medium in Bezug auf das Rohr 16 zentriert. Es sei erwähnt, dass das Rohr 16 und das druckdicht zu verbindende Rohr 2 bevorzugt einen selben Innendurchmesser 21 aufweisen.

Die Anschlussmuffe 18 bildet zwischen dem Zentrierring 19 und einem Stimende 29 die dem Rohr 2 zugewandte Aufnahmenut 8 für den das Rohr 2 umfassenden Dichtungsring 3 auf. Dazu ist die Aufnahmenut in einem Teilbereich als Innenkonus ausgebildet, der in Richtung des Stirnendes 22 in eine Bohrung 23 übergeht, mit einem Innendurchmesser 24, der gering größer ist als ein Außendurchmesser 25 des Dichtungsringes 3.

Die druckdichte Fixierung des Rohres 2 in der Anschlussmuffe 18 erfolgt mit einer die Anschlussmuffe 18 umfassenden Überwurfmutter 26 welche über ein Innengewinde 27 mit der Anschlussmuffe 18 verschraubt ist. Die Überwurfmutter 26 weist den in die Bohrung 23 der Anschlussmuffe 18 einragenden Ringfortsatz 12 auf, welcher bei Festziehen der Gewindeverbindung eine axiale Druckkraft - gemäß Pfeil 28 - auf das Dichtelement 3 bewirkt und damit ein dichtender Presssitz des Dichtelements 3 in der Aufnahmenut 8 der Anschlussmuffe 18 und am Rohr 2 erreicht wird. Durch die konische Ausbildung des Dichtelements 3 und des Innenkonus des Ringfortsatzes wird aber auch eine Kraftkomponente - gemäß Pfeil 28 - in zu einer Längsmittelachse 29 radialen Richtung auf den Dichtungsring 3 bewirkt, mit der das bzw. die im Dichtungsring 3 angeordneten Rückhalteelemente 5 zur Verhinderung eines Auszuges des Rohrs 2 gegen den Außenumfang 13 des Rohres 2 gepresst werden.

Die beschriebene Ausführung der Verbindungsvorrichtung 1 kann, wie bereits beschrieben, bei Gussrohren Anwendung finden, eignet sich insbesondere auch für die Verbindung von Kunststoffrohren, wobei in diesem Fall sowohl die Anschlussmuffe 18 wie auch die Überwurfmutter 26 als Spritzformteile aus Kunststoff, insbesondere aus faserverstärktem Polyamid, etc. gebildet sein können.

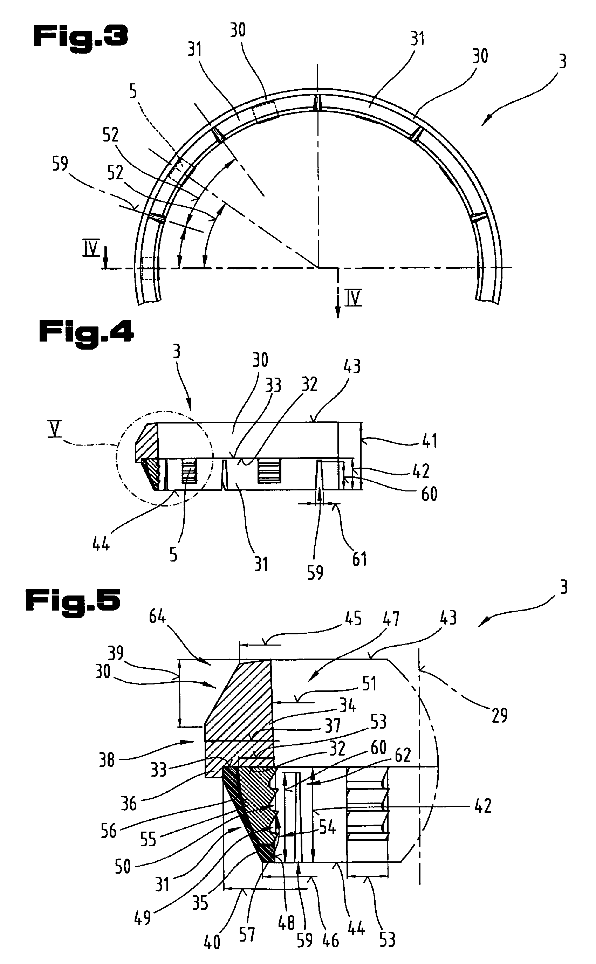

In den Fig. 3 bis 5 ist der erfindungsgemäße Dichtungsring 3 gezeigt. Dieser besteht aus einem ringförmigen Dichtelement 30 und einem Stützring 31 und bevorzugt mehreren Rückhalteelementen 5 die im Stützring 31 angeordnet sind. Das Dichtelement 30 und der Stützring 31 sind im Wesentlichen aus an Basisringflächen 32, 33 bewegungsfest, insbesondere thermisch miteinander verbundenen Hohlkegelabschnitte 34, 35 gebildet. Das Dichtelement 30 und der Stützring 35 sind aus einem elastomeren Material mit unterschiedlicher Elastizität gebildet. So ist z.B. das Dichtelement 30 aus Gummi mit etwa zwischen 40 und 80 ShA und aufvulkanisiert auf den aus beispielsweise faserverstärktem Polyamid bestehenden Stützring 31. Dabei wird die Basisringfläche 33 des Stützringes 31 vom Material des Dichtelements 30 umfangsseitig von einem Ringfortsatz 36 umfasst und ist ein Außendurchmesser 37 eines zylindrischen Teilbereiches 38 einer Breite 39 des Dichtelementes 30 größer als ein Außendurchmesser 40 des Stützringes 31. Eine Gesamtbreite 41 des Dichtungsringes 3 setzt sich aus der Breite 39 des Dichtelements 30 und einer etwa gleich großen Breite 42 des Stützringes zusammen. An entgegen gesetzten Stirnflächen 43, 44 weist das Dichtelement 30 infolge der Ausbildung als Hohlkegelabschnitt 34 einen Durchmesser 45 auf, der kleiner ist als der Außendurchmesser 37, wie ebenfalls der Stützring 31 an der Stirnfläche 44 einen kleineren Durchmesser 46 gegenüber dem Außendurchmesser 40 aufweist. Dies ergibt sowohl für das Dichtelement 30 wie auch den Stützring 31 Kegelmantelflächen, die im Bezug auf die Basisringflächen 32, 33 gegengleich verlaufen. Eine Durchgangsbohrung 47 des Dichtelements 30 und des Stützringes 31 ist in etwa gleich groß und im Stützring 31 etwa zylindrisch und im Dichtelement 30 mit geringer Konizität von der Basisringfläche 32 in Richtung der Stirnfläche 43 erweitert ausgebildet.

Der Stützring 31 weist der Längsmittelachse 29 zugewandt an einer Innenoberfläche 48 über einen Umfang gleichmäßig verteilt, ausgehend von der Basisringfläche 33 in Richtung der Stirnfläche 44 erstreckende Vertiefungen 49 auf, welche Aufnahmekammem 50 für die Rückhalteelemente 5 ausbilden, wobei die Aufnahmekammern 50 im Bereich der Stirnfläche 44 durch das Material des Stützringes 31 geschlossen ausgebildet sind. Eine Anzahl der Rückhalteelemente 5 wird in Abhängigkeit eines Bohrungsdurchmessers 51, wobei ein Zentrumswinkel 52 zwischen benachbart angeordneter Aufnahmekammern 50 ein Teilbetrag von 360 ° beträgt. Eine Tiefe 53 der Aufnahmekammer 50 ist bevorzugt ebenfalls in Abhängigkeit des Bohrungsdurchmessers 51 ausgelegt. Die Tiefe 53 der Aufnahmekammer ist vorzugsweise im Bereich der Basisringfläche 33 größer, als in einem der Stirnfläche 44 zugewandten Endbereich 54. Damit ergibt sich eine Stützfläche 55 im Stützring 31 für das Rückhalteelement 5, die ausgehend von der Basisringfläche 33 in Richtung des Endbereiches 54 in Richtung der Längsmittelachse 29 winkelig verläuft. Möglich ist dabei auch eine Ausbildung, bei der die Stützfläche 55 und dementsprechend auch eine Anlagefläche 56 des Rückhalteelements 5 bogenförmig verläuft. Es ergibt sich damit eine Konizität der Aufnahmekammer, durch welche das Rückhalteelement 5 in dieser gesichert aufgenommen und gehaltert ist.

In der Aufnahmekammer 50 sind die Rückhaltelemente 5, die bevorzugt aus metallischem Werkstoff bestehen, z.B. über Presssitz eingesetzt und weisen diese der Längsmittelachse 29 zugewandt und die Innenoberfläche 48 der Durchgangsbohrung 47 überragende, z.B. durch sägezahnartige Querrippen gebildete Rückhaltemittel 57 auf. Die über die gesamte Breite 53 des Rückhalteelements 5 verlaufen und durch Eindringen in eine Außenoberfläche 58 des Rohres 2 Auszugskräften - gemäß Pfeil 4 - entgegen wirken und somit das Rohr 2 in der Verbindungsvorrichtung 1 verlässlich haltern.

Eine Anpassung des eine gegenüber dem Dichtelement 30 eine geringere Elastizität aufweisenden Stützringes 31 an das Rohr 2, bzw. dessen Außenoberfläche 58 wird durch im Stützring 31, in dem Zentrumswinkel 52 als Teilungswinkel beabstandete Schlitze 59 erreicht die um einen halben Teilungswinkel gegenüber den Aufnahmekammern 50 mit den Rückhalteelementen 5 versetzt sind. Die Schlitze 59 sind im Stützring 31, ausgehend von der Stirnfläche 44 in Richtung der Basisringfläche 33 verlaufend und im Mittel zwischen den benachbarten Halteelementen 5 vorgesehen, wobei eine Tiefe 60 gering kleiner ist, als die Breite 42 des Stützringes 31. Eine Schlitzbreite 61 beträgt in etwa im Bereich der Stirnfläche 44 zwischen 2 mm und 4 mm, wobei die Schlitze 59 an einem der Basisringfläche 33 zugewandten Ende 62 kleiner ist.

Beispielsweise erfolgt die Fertigung des Dichtungsringes 3 durch Spritzen des Stützringes 31 in der vorhergehend beschriebenen Ausführung als Hohlkegelabschnitt 35 mit den Aufnahmekammern 50 und erfolgt danach ein Einpressen der Rückhalteelemente 58 in die Aufnahmekammern 50. An dieser Stelle sei bemerkt, dass zur weiteren Halterung der Rückhalteelemente 5 in den Aufnahmekammern 50 des Stützringes 31 an diesem die Basisringfläche 33 überragende und die Aufnahmekammer 50 und damit das Rückhalteelemente 5 bereichsweise überdeckende Rastnasen vorgesehen sein können.

Nach Bestückung des Stützringes 31 mit den Rückhalteelementen 5 erfolgt in einem Vulkanisiervorgang das Anformen des Dichtelements 30 in der vorher beschriebenen Ausführung. Damit wird ein dem Dichtungsring 3 ausbildendes Verbundelement 64 geschaffen, welches hohen Anforderungen an Maßhaltigkeit, Qualität, Dauerstandsfestigkeit etc., gerecht wird.

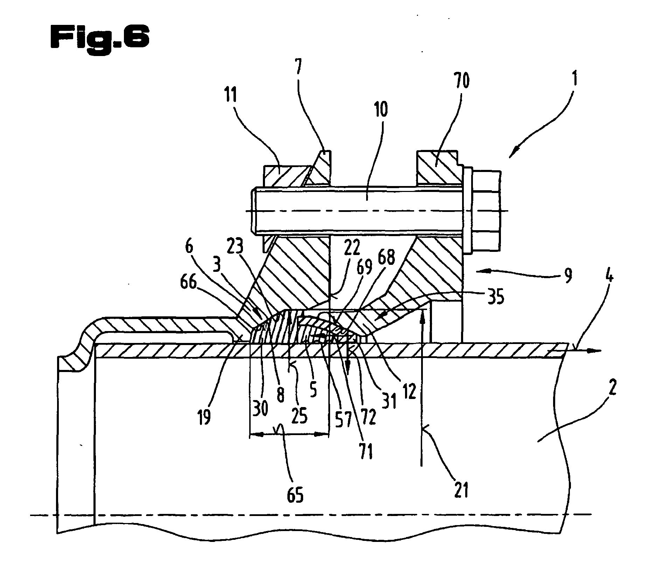

In der Fig. 6 ist noch in einem Detailausschnitt die Verbindungsvorrichtung 1 mit dem Dichtungsring 3 zur Herstellung der druckdichten Verbindung zwischen dem Rohr 2 und dem Rohradapter 6 gezeigt.

In der Aufnahmenut 8 des Rohradpaters 6 ist der Dichtungsring 3, bestehend aus dem Dichtelement 30 und dem Stützring 31, in Anlage an den Zentrierring 19, welcher die Aufnahmenut 8 in axialer Richtung begrenzt und einstückig einen Innenring des Rohradapters 6 bildet, eingesetzt. Eine Umfangsfläche der Aufnahmenut ist ausgehend vom Stirnende 22 des Rohradapters durch einen Teilbereich einer Tiefe 65 durch die zylindrische Bohrung 23 gebildet, mit dem Innendurchmesser 21, der größer ist, als der Außendurchmesser 25 des Dichtungsringes 3. In Richtung des Zentrierringes 19 bildet die Aufnahmenut eine Innenkonusfläche 66 aus, die entsprechend einer Kegelmantelfläche 67 des Dichtelements 30 ausgebildet ist.

Der Stützring 31, gebildet aus dem Hohlkegelabschnitt 35 wird vom Ringfortsatz 12 des Spannringes 9 umfangsseitig umfasst, wobei eine Spannfläche 68 des Ringfortsatzes 12 entsprechend einer Kegelmantelfläche 69 des Stützringes 31 ausgebildet ist.

Bei einer Relativbewegung des Spannringes 9 bzw. der Überwurfmutter 26 in axialer Richtung gegen den Rohradapter 6 mittels der Spannschrauben 10, welche zwischen einem Flansch 70 des Spannringes 9 und der den Flanschring 7 des Rohradapters 6 hintergreifenden Spannklaue 11 wirken, wird vom Ringfortsatz 12 auf den Dichtungsring, bzw. dem Stützring 31 und über diesen auf das Dichtelement 30, eine Kraft in axialer Richtung - gemäß Pfeil 71 - wie auch durch die Konizität der Spannfläche 68 und Kegelmantelfläche 69 eine radiale Kraftkomponente - gemäß Pfeil 72 - ausgeübt, wodurch einerseits das Dichtelement in der Aufnahmenut 8 verpresst und andererseits das im Stützring 31 angeordnete Rückhalteelement 5 gegen das Rohr 2 gepresst wird.

Dabei kommt es zu einem Einpressen der sägezahnförmigen Rückhaltemittel 57 an der Oberfläche des Rohres 2, wodurch eine sehr hohe Rückhaltekraft gegen eine Auszugskraft - gemäß Pfeil 4 - gewährleistet ist.

Dieselbe Wirkung wird aber auch durch die wie in der Fig. 2 beschriebene Ausbildung der Verbindungsvorrichtung mit der Überwurfmutter 26 erzielt.

Die Ausführungsbeispiele zeigen mögliche Ausführungsvarianten des Dichtungsringes 3 bzw. der Verbindungsvorrichtung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Dichtungsringes sowie der Verbindungsvorrichtung dieser bzw. diese bzw. Bestandteile teilweise unmaßstäblich und/oder vergrößert und/oder verkleinert dargestellt wurden.

### Bezugszeichenaufstellung

- 1: Verbindungsvorrichtung
- 2: Rohr
- 3: Dichtungsring
- 4: Pfeil
- 5: Rückhalteelement

- 6: Rohradapter
- 7: Flanschring
- 8: Aufnahmenut
- 9: Spannring
- 10: Schraube

- 11: Spannklaue
- 12: Ringfortsatz
- 13: Außenumfang
- 14: Auszugssicherung
- 15: Ende

- 16: Rohr
- 17: Außengewinde
- 18: Anschlussmuffe
- 19: Zentrierring
- 20: Innenaufnahme

- 21: Innendurchmesser
- 22: Stirnende
- 23: Bohrung
- 24: Innendurchmesser
- 25: Außendurchmesser

- 26: Überwurfmutter
- 27: Innengewinde
- 28: Pfeil
- 29: Längsmittelachse
- 30: Dichtelement

- 31: Stützring
- 32: Basisringfläche
- 33: Basisringfläche
- 34: Hohlkegelabschnitt
- 35: Hohlkegelabschnitt

- 36: Ringfortsatz
- 37: Außendurchmesser
- 38: Teilbereich
- 39: Breite
- 40: Außendurchmesser

- 41: Gesamtbreite
- 42: Breite
- 43: Stirnfläche
- 44: Stirnfläche
- 45: Durchmesser

- 46: Durchmesser
- 47: Durchgangsbohrung
- 48: Innenoberfläche
- 49: Vertiefung
- 50: Aufnahmekammer

- 51: Bohrungsdurchmesser
- 52: Zentrumswinkel
- 53: Tiefe
- 54: Endbereich
- 55: Stützfläche

- 56: Anlagefläche
- 57: Rückhaltemittel
- 58: Außenoberfläche
- 59: Schlitz
- 60: Tiefe

- 61: Schlitzbreite
- 62: Ende
- 64: Verbundelement
- 65: Tiefe

- 66: Innenkonusfläche
- 67: Kegelmantelfläche
- 68: Spannfläche
- 69: Kegelmantelfläche
- 70: Flansch

- 71: Pfeil
- 72: Pfeil

## Patentansprüche

1. Dichtungsring (3), insbesondere für eine druckdichte Verbindungsvorrichtung (1) eines Rohres (2) mit einer Anschlussarmatur, z.B. Rohradapter (6), wobei der Dichtungsring (3) als Verbundelement (64) aus einem elastischen, ringförmigen Dichtelement (30) und einem mit diesem in zu einer zu einer Längsmittelachse senkrechten Ebene bewegungsfest verbundenen, eine gegenüber einer Elastizität des Dichtelementes (30) eine geringere Elastizität aufweisenden Stützring (31), gebildet ist, und wobei das Dichtelement (30) und der Stützring (31) aus an Basisringflächen (32, 33) miteinander verbundenen, eine Durchgangsbohrung (47) umgrenzenden Hohlkegelabschnitten (34, 35) gebildet sind, **dadurch gekennzeichnet, dass** im Stützring (31), der Längsmittelachse zugewandt, Aufnahmekammern (50), mit in diesen angeordneten Rückhaltelementen (5) ausgebildet sind, die mit Rückhaltemittel (57) eine Innenoberfläche (48) der Durchgangsbohrung (47) überragen.

2. Dichtungsring (3) nach Anspruch 1, **dadurch gekennzeichnet, dass** die Aufnahmekammern (50) mit den Rückhalteelementen (5) über einen Innenumfang des Stützringes (31), bevorzugt in einer gleichmäßigen Winkelteilung, angeordnet sind.

3. Dichtungsring (3) nach Anspruch 1 oder 2, **dadurch gekennzeichnet, dass** die Aufnahmekammer (50) für das Rückhalteelement (31) im Stützring (31) von der Basisringfläche (33) ausgehend nur über einen Teilbereich einer Breite (42) des Stützringes (31) verläuft und eine in Richtung der Stirnfläche (44) des Stützringes (31) geneigte Stützfläche (55) für das Rückhalteelement (31) ausbildet.

4. Dichtungsring (3) nach einem der vorhergehenden Ansprüche, **dadurch gekennzeichnet, dass** das Rückhaltelement (5) in die Aufnahmekammer (50) in axialer und/oder radialer Richtung einsetzbar ist.

5. Dichtungsring (3) nach einem der vorhergehenden Ansprüche, **dadurch gekennzeichnet, dass** das Rückhalteelement (5) als Rückhaltemittel (57) der Längsmittelachse (29) zugewandt, mehrere parallel zueinander verlaufende, sägezahnartige Querrippen aufweist.

6. Dichtungsring (3) nach einem der vorhergehenden Ansprüche, **dadurch gekennzeichnet, dass** das Rückhalteelement (5) in der Aufnahmekammer (50) über einen Presssitz gehaltert ist.

7. Dichtungsring (3) nach einem der vorhergehenden Ansprüche, **dadurch gekennzeichnet, dass** das Rückhalteelement (5) in der Aufnahmekammer (50) über am Stützring (31) angeordnete Rastnasen gehaltert ist.

8. Dichtungsring (3) nach einem der vorhergehenden Ansprüche, **dadurch gekennzeichnet, dass** die Rastnasen durch einen partiellen Warmformvorgang am Stützring (31) gebildet sind.

9. Dichtungsring (3) nach einem der vorhergehenden Ansprüche, **dadurch gekennzeichnet, dass** das Dichtelement (30) im Bereich der Basisringfläche (32) über einen Teilbereich einer Breite (39) eine zylindrische Außenumfangsfläche aufweist.

10. Dichtungsring (3) nach einem der vorhergehenden Ansprüche, **dadurch gekennzeichnet, dass** ein Außendurchmesser (40) der Außenumfangsfläche des Dichtelementes (30) im Bereich der Basisringfläche (33) größer ist als ein Durchmesser (45) des Dichtelementes (30) im Bereich von dessen Stirnfläche (43) und größer ist als ein Durchmesser (46) des Stützringes (31) im Bereich von dessen Stirnfläche (44).

11. Dichtungsring (3) nach einem der vorhergehenden Ansprüche, **dadurch gekennzeichnet, dass** die Basisringflächen (32, 33) etwa im Mittel der Gesamtbreite (41) angeordnet sind.

12. Dichtungsring (3) nach einem der vorhergehenden Ansprüche, **dadurch gekennzeichnet, dass** der Stützring (31) im Bereich seiner Basisringfläche (33) von einem Ringfortsatz (36) des Dichtelementes (22) umfasst ist.

13. Dichtungsring (3) nach einem der vorhergehenden Ansprüche, **dadurch gekennzeichnet, dass** im Stützring (31), ausgehend von dessen Stirnfläche (44), über einen Teilbereich der Breite (42) erstreckend, in radialer Richtung verlaufende Schlitze (59) vorgesehen sind.

14. Dichtungsring (3) nach einem der vorhergehenden Ansprüche, **dadurch gekennzeichnet, dass** jeweils ein Schlitz (59) im Mittel einer Winkelteilung zwischen den Aufnahmekammern (50) angeordnet ist.

15. Dichtungsring (3) nach einem der vorhergehenden Ansprüche, **dadurch gekennzeichnet, dass** das Dichtungselement (30) bevorzugt aus einem Elastomermaterial, insbesondere Gummi, mit etwa 40 bis 80 ShA besteht.

16. Dichtungsring (3) nach einem der vorhergehenden Ansprüche, **dadurch gekennzeichnet, dass** der Stützring (31) bevorzugt aus Polyamid, bevorzugt einem faserverstärktem Polyamid besteht.

17. Dichtungsring (3) nach einem der vorhergehenden Ansprüche, **dadurch gekennzeichnet, dass** das Rückhalteelement (5) aus einem Eisenwerkstoff, bevorzugt beschichtetem Eisenwerkstoff besteht.

18. Dichtungsring (3) nach einem der vorhergehenden Ansprüche, **dadurch gekennzeichnet, dass** das Rückhalteelement (5) aus Kunststoff, bevorzugt verstärktem Kunststoff, z.B. Polyamid besteht.

19. Verbindungsvorrichtung (1) für eine druckdichte Verbindung eines Rohres (2) mit einer Anschlussarmatur, z.B. Rohradapter (6) und mit einem Dichtungsring (3) nach einem der Ansprüche 1 bis 16, **dadurch gekennzeichnet, dass** in einer an einem Stirnende (22) des Rohradapters (6) ausgebildeten Aufnahmenut (8) der Dichtungsring (3) gegen einen ein Anschlagmittel ausbildenden, das Rohr (2) umfassenden Zentrierring (19) durch einen in die Aufnahmenut (8) einragenden, in axialer Richtung gegenüber dem Rohradapter (6) relativ verstellbaren, an einer Kegelmantelfläche des Stützringes (31) anwirkenden Ringfortsatz (12) spannbar ist und die Aufnahmenut (8) im Bereich eines Stirnendes (22) des Rohradapters als Bohrung (23) ausgebildet ist, die in Richtung des Zentrierringes (19) eine Innenkonusfläche entsprechend einer Kegelmantelfläche des Dichtelementes (30) ausbildet.

20. Verbindungsvorrichtung nach Anspruch 19, **dadurch gekennzeichnet, dass** der Ringfortsatz (12) eine dem Stützring (31) zugewandte Spannfläche entsprechend der Kegelmantelfläche des Stützringes (31) aufweist.

21. Verbindungsvorrichtung (1) nach Anspruch 19 oder 20, **dadurch gekennzeichnet, dass** der Spannring (9) mit dem Ringfortsatz (12) als mit dem Rohradapter (6) über Schrauben (10) verbundener Flanschring ausgebildet ist.

22. Verbindungsvorrichtung (1) nach Anspruch 19 oder 20, **dadurch gekennzeichnet, dass** der Spannring (9) mit dem Ringfortsatz (12) als Überwurfmutter (26) ausgebildet ist die über eine Gewindeanordnung mit dem Rohradapter (6) verbunden ist.

23. Verbindungsvorrichtung nach einem der Ansprüche 19 bis 22, **dadurch gekennzeichnet, dass** der Rohradapter (6) und/oder der Spannring aus metallischen Werkstoff gebildet sind.

24. Verbindungsvorrichtung nach einem der Ansprüche 19 bis 23, **dadurch gekennzeichnet, dass** der Rohradapter (6) und/oder der Spannring (31) aus Kunststoff gebildet sind.

## Claims

1. Gasket (3), in particular for a device (1) for establishing a pressure-tight connection of a pipe (2) by means of a connector fitting, e.g. a pipe adapter (6), which gasket (3) is provided in the form of a fitting (64) comprising an elastic, annular seal element (30) and a supporting ring (31) connected to it so as to be prevented from moving in a plane perpendicular to a longitudinal axis and having a lower elasticity than an elasticity of the seal element (30), and the seal element (30) and supporting ring (3) are formed by hollow tapered sections (34, 35) connected to one another at base ring surfaces (32, 33) surrounding an end-to-end bore (47), **characterised in that** retaining chambers (50) are formed in the supporting ring (31) facing the longitudinal mid-axis with retaining elements (5) disposed therein, which project out from an internal top face (48) of the end-to-end bore (47) by means of retaining means (57).

2. Gasket (3) as claimed in claim 1, **characterised in that** the retaining chambers (50) with the retaining elements (5) are disposed around an internal circumference of the supporting ring (31), preferably distributed at equidistant angles.

3. Gasket (3) as claimed in claim 1 or 2, **characterised in that** the retaining chamber (50) for the retaining element (5) in the supporting ring (31) extends from the base ring surface (33) across only a part-region of a width (42) of the supporting ring (31) and forms an inclined support surface (55) for the retaining element (5) in the direction of the end face (44) of the supporting ring (31).

4. Gasket (3) as claimed in one of the preceding claims, **characterised in that** the retaining element (5) can be inserted in the retaining chamber (50) in the axial and/or radial direction.

5. Gasket (3) as claimed in one of the preceding claims, **characterised in that** the retaining element (5) has several saw-tooth transverse ribs extending parallel with one another facing the longitudinal mid-axis serving as retaining means (57).

6. Gasket (3) as claimed in one of the preceding claims, **characterised in that** the retaining element (5) is held in the retaining chamber (50) by means of a force fit.

7. Gasket (3) as claimed in one of the preceding claims, **characterised in that** the retaining element (5) is held in the retaining chamber (50) by means of catch lugs disposed on the supporting ring (31).

8. Gasket (3) as claimed in one of the preceding claims, **characterised in that** the catch lugs are formed on the supporting ring (31) by a partial heat forming process.

9. Gasket (3) as claimed in one of the preceding claims, **characterised in that** the seal element (30) has a cylindrical outer circumferential surface in the region of the base ring surface (32) across a part-region of a width (39).

10. Gasket (3) as claimed in one of the preceding claims, **characterised in that** an external diameter (40) of the outer circumferential surface of the gasket (30) in the region of the base ring surface (33) is bigger than a diameter (45) of the seal element (30) in the region of its end face (43) and bigger than a diameter (46) of the supporting ring (31) in the region of its end face (44).

11. Gasket (3) as claimed in one of the preceding claims, **characterised in that** the base ring surfaces (32, 33) are disposed approximately at the centre of the total width (41).

12. Gasket (3) as claimed in one of the preceding claims, **characterised in that** the supporting ring (31) is surrounded by an annular extension (36) of the seal element (30) in the region of its base ring surface (33).

13. Gasket (3) as claimed in one of the preceding claims, **characterised in that** slots (59) running in the radial direction are provided in the supporting ring (31) extending from its end face (44) across a part-region of the width (42).

14. Gasket (3) as claimed in one of the preceding claims, **characterised in that** a slot (59) is disposed respectively at the centre of each angle pitch between the retaining chambers (50).

15. Gasket (3) as claimed in one of the preceding claims, **characterised in that** the seal element (30) is preferably made from an elastomeric material, in particular rubber, with approximately 40 to 80 ShA.

16. Gasket (3) as claimed in one of the preceding claims, **characterised in that** the supporting ring (31) is preferably made from polyamide, preferably a fibre-reinforced polyamide.

17. Gasket (3) as claimed in one of the preceding claims, **characterised in that** the retaining element (5) is made from a ferrous material, preferably coated ferrous material.

18. Gasket (3) as claimed in one of the preceding claims, **characterised in that** the retaining element (5) is made from plastic, preferably reinforced plastic, e.g. polyamide.

19. Connecting device (1) for establishing a pressure-tight connection of a pipe (2) to a connector fitting, e.g. pipe adapter (6), and with a gasket (3) as claimed in one of claims 1 to 16, **characterised in that** the gasket (3) can be clamped in a retaining groove (8) disposed in a front end (22) of the pipe adapter (6) against a centring ring (19) surrounding the pipe (2) serving as a stop means by means of an annular extension (12) projecting into the retaining groove (8) acting on a tapered surface of the supporting ring (31) and displaceable in the axial direction relative to the pipe adapter (6), and the retaining groove (8) is disposed in the region of a front end (22) of the pipe adapter in the form of a bore (23) which forms an internal cone surface matching a tapered surface of the seal element (30) in the direction of the centring ring (19).

20. Connecting device as claimed in claim 19, **characterised in that** the annular extension (12) has a clamping surface facing the supporting ring (31) matching the tapered surface of the supporting ring (31).

21. Connecting device (1) as claimed in claim 19 or 20, **characterised in that** the clamping ring (9) incorporating the annular extension (12) is provided in the form of a flange ring connected to the pipe adapter (6) by means of screws (10).

22. Connecting device (1) as claimed in claim 19 or 20, **characterised in that** the clamping ring (9) incorporating the annular extension (12) is provided in the form of a clamping nut (26) connected to the pipe adapter (6) by means of a thread arrangement.

23. Connecting device as claimed in one of claims 19 to 22, **characterised in that** the pipe adapter (6) and/or clamping ring are made from metallic material.

24. Connecting device as claimed in one of claims 19 to 23, **characterised in that** the pipe adapter (6) and/or clamping ring (31) are made from plastic.

## Revendications

1. Bague d'étanchéité (3), en particulier pour un dispositif de liaison (1) étanche à la pression d'un tube (2) avec une armature de connexion, par exemple un adaptateur de tube (6), où la bague d'étanchéité (3) est réalisée comme un élément combiné (64) par un élément d'étanchéité élastique, annulaire (30) et une bague de support (31) solidaire en mouvement avec celui-ci dans un plan perpendiculaire à un axe médian longitudinal, présentant une élasticité plus réduite par rapport à une élasticité de l'élément d'étanchéité (30), et où l'élément d'étanchéité (30) et la bague de support (31) sont formés par des tronçons coniques creux (34, 35) reliés à des faces annulaires de base (32, 33) les uns aux autres, entourant un perçage traversant (47), **caractérisée en ce que** sont réalisées dans la bague de support (31), orientées vers l'axe médian longitudinal, des enceintes de réception (50), avec des éléments de retenue (5) disposés dans celles- ci, qui font saillie avec des moyens de retenue (57) sur une surface intérieure (48) du perçage traversant (47).

2. Bague d'étanchéité (3) selon la revendication 1, **caractérisée en ce que** les enceintes de réception (50) avec les éléments de retenue (57) sont disposées sur une périphérie intérieure de la bague de support (31), de préférence selon une subdivision angulaire régulier.

3. Bague d'étanchéité (3) selon la revendication 1 ou 2, **caractérisée en ce que** l'enceinte de réception (50) pour l'élément de retenue (31) dans la bague de support (31), en partant de la face annulaire de base (33), s'étend seulement sur une zone partielle d'une largueur (42) de la bague de support (31) et forme une face de support (55) pour l'élément de retenue (31) inclinée en direction de la face frontale (44) de la bague de support (31).

4. Bague d'étanchéité (3) selon l'une des revendications précédentes, **caractérisée en ce que** l'élément de retenue (5) peut être placé dans l'enceinte de réception (50) dans la direction axiale et/ou radiale.

5. Bague d'étanchéité (3) selon l'une des revendications précédentes, **caractérisée en ce que** l'élément de retenue (5), en tant que moyens de retenue (57) orientés vers l'axe médian longitudinal (29), présente plusieurs nervures transversales en forme de dents de scie, s'étendant parallèlement les unes aux autres.

6. Bague d'étanchéité (3) selon l'une des revendications précédentes, **caractérisée en ce que** l'élément de retenue (5) est retenu dans l'enceinte de réception (50) par un ajustement avec serrage.

7. Bague d'étanchéité (3) selon l'une des revendications précédentes, **caractérisée en ce que** l'élément de retenue (5) est retenu dans l'enceinte de réception (50) par des ergots d'enclenchement disposés à la bague de support (31).

8. Bague d'étanchéité (3) selon l'une des revendications précédentes, **caractérisée en ce que** en ce que les ergots d'enclenchement sont formés par une opération de formage à chaud partielle à la bague de support (31).

9. Bague d'étanchéité (3) selon l'une des revendications précédentes, **caractérisée en ce que** l'élément d'étanchéité (30), dans la zone de la face annulaire de base (32), présente une face périphérique extérieure cylindrique sur une zone partielle d'une largueur (39).

10. Bague d'étanchéité (3) selon l'une des revendications précédentes, **caractérisée en ce qu'**un diamètre extérieur (40) de la face périphérique extérieure de l'élément d'étanchéité (30), dans la zone de la face annulaire de base (33), est plus grand qu'un diamètre (45) de l'élément d'étanchéité (30) dans la zone de sa face frontale (43) et est plus grand qu'un diamètre (46) de la bague de support (31) dans la zone de sa face frontale (44).

11. Bague d'étanchéité (3) selon l'une des revendications précédentes, **caractérisée en ce que** les faces annulaires de base (32, 33) sont disposées à peu près au milieu de la largueur totale (41).

12. Bague d'étanchéité (3) selon l'une des revendications précédentes, **caractérisée en ce que** la bague de support (31), dans la zone de sa face annulaire de base (33), est entourée par un prolongement annulaire (36) de l'élément d'étanchéité (22).

13. Bague d'étanchéité (3) selon l'une des revendications précédentes, **caractérisée en ce que**, dans la bague de support (31), en partant de sa face frontale (44), sont prévues des fentes (59) s'étendant sur une zone partielle de la largueur (42), s'étendant dans la direction radiale.

14. Bague d'étanchéité (3) selon l'une des revendications précédentes, **caractérisée en ce que** respectivement une fente (59) est ménagée au milieu d'une subdivision d'un angle entre les enceintes de réception (50).

15. Bague d'étanchéité (3) selon l'une des revendications précédentes, **caractérisée en ce que** l'élément d'étanchéité (30) est réalisé de préférence en un matériau élastomère, en particulier en caoutchouc, avec environ 40 à 80 ShA.

16. Bague d'étanchéité (3) selon l'une des revendications précédentes, **caractérisée en ce que** la bague de support (31) est réalisée de préférence en polyamide, de préférence en un polyamide renforcé par des fibres.

17. Bague d'étanchéité (3) selon l'une des revendications précédentes, **caractérisée en ce que** l'élément de retenue (5) est réalisé en un matériau de fer, de préférence en matériau de fer revêtu.

18. Bague d'étanchéité (3) selon l'une des revendications précédentes, **caractérisée en ce que** l'élément de retenue (5) est réalisé en matériau synthétique, de préférence en matériau synthétique renforcé, par exemple en polyamide.

19. Dispositif de liaison (1) pour une liaison étanche à la pression d'un tube (2) avec une armature de connexion, par exemple un adaptateur de tube (6) et avec une bague d'étanchéité (3) selon l'une des revendications 1 à 16, **caractérisé en ce que**, dans une rainure de réception (8) réalisée à une extrémité frontale (22) de l'adaptateur de tube (6), la bague d'étanchéité (3) peut être serrée contre une bague de centrage (19) formant un moyen de butée, entourant le tube (2), par un prolongement annulaire (12) faisant saillie dans la rainure de réception (8), ajustable dans la direction axiale relativement à l'adaptateur de tube (6), agissant à une face d'enveloppe conique de la bague de support (31), et la rainure de réception (8) est réalisée dans la zone d'une extrémité frontale (22) de l'adaptateur de tube comme perçage (23), qui forme dans la direction de la bague de centrage (19) une face conique intérieure correspondant à une face d'enveloppe conique de l'élément d'étanchéité (30).

20. Dispositif de liaison selon la revendication 19, **caractérisé en ce que** le prolongement annulaire (12) présente une face de serrage orientée vers la bague de support (31) correspondant à la face d'enveloppe conique de la bague de support (31).

21. Dispositif de liaison (1) selon la revendication 19 ou 20, **caractérisé en ce que** la bague de serrage (9) avec le prolongement annulaire (12) est réalisée comme anneau de bride relié à l'adaptateur de tube (6) par des vis (10).

22. Dispositif de liaison (1) selon la revendication 19 ou 20, **caractérisé en ce que** la bague de serrage (9) avec le prolongement annulaire (12) est réalisée comme écrou-raccord (26) qui est relié par un agencement de filetage à l'adaptateur de tube (6).

23. Dispositif de liaison selon l'une des revendications 19 à 22, **caractérisé en ce que** l'adaptateur de tube (6) et/ou la bague de serrage sont réalisés en un matériau métallique.

24. Dispositif de liaison selon l'une des revendications 19 à 23, **caractérisé en ce que** l'adaptateur de tube (6) et/ou la bague de serrage (31) sont réalisés en matériau synthétique.
